# FASCICULE DE BREVET EUROPEEN

(11) **EP 1 558 035 B1**
(45) Date de publication et mention de la délivrance du brevet: **11.06.2008**
(21) Numéro de dépôt: 05290076.8
(22) Date de dépôt: 12.01.2005
(51) Int. Cl.: H04N 7/10, H04H 1/00, H04L 12/28

(54) **Procédé et système de distribution dans une installation de réception satellitaire**
Übertragungssystem und -verfahren in Satelliten-Hausverteilungsanlagen
Method and system for distributing signals in a satellite reception installation

(30) Priorité: 20.01.2004 FR 0400502
(43) Date de publication de la demande: 27.07.2005
(73) Titulaire: STMicroelectronics S.A., 92120 Montrouge (FR)
(72) Inventeur: Couet, Jean-Yves, 38950 Saint-Martin Le Vinoux (FR)
(74) Mandataire: Verdure, Stéphane

(56) Documents cités:
- WO-A-01/17143
- WO-A-02/065780
- WO-A-20/04038965
- DE-A- 10 155 481
- DE-A- 19 749 120
- DE-U- 20 008 239
- FR-A- 2 835 368
- US-A- 5 760 822
- EUROPEAN TELECOMMUNICATIONS SATELLITE ORGANIZATION: "Technical Recommandations for Manufacturers of DTH and SMATV Receiving Equipment - DiSEqC Version 4.0 - BUS FUNCTIONAL SPECIFICATION" ETSO, 22 mars 1996 (1996-03-22), XP002149629
- PATENT ABSTRACTS OF JAPAN vol. 2000, no. 11, 3 janvier 2001 (2001-01-03) & JP 2000 232462 A (SHOWA ELECTRIC WIRE & CABLE CO LTD), 22 août 2000 (2000-08-22)

## Description

La présente invention est relative aux installations de réception satellitaire comprenant plusieurs unités de traitement, encore nommées boîtiers (box en anglais), et concerne plus particulièrement les échanges de données entre ces unités de traitement.

Le domaine des installations de réception satellitaire est en plein essor depuis quelques années. Les services offerts par de telles installations, notamment la télévision par satellite, ont largement contribué à ce développement important. Parallèlement, le marché des appareils vidéo en tout genre (TV, magnétoscope numérique...) a pris une grande ampleur et nombreux sont les foyers qui possèdent une installation de réception satellitaire comprenant plusieurs unités de traitement, ou boîtier (box en anglais) distribuées dans différentes pièces de la maison familiale. Dans une telle installation, les unités de traitement sont toutes connectées à une tête de réception unique, encore nommée LNB (en anglais, « Low Noise Block downconverter ») ou plus simplement désigné par le terme de récepteur satellite dans la présente description.

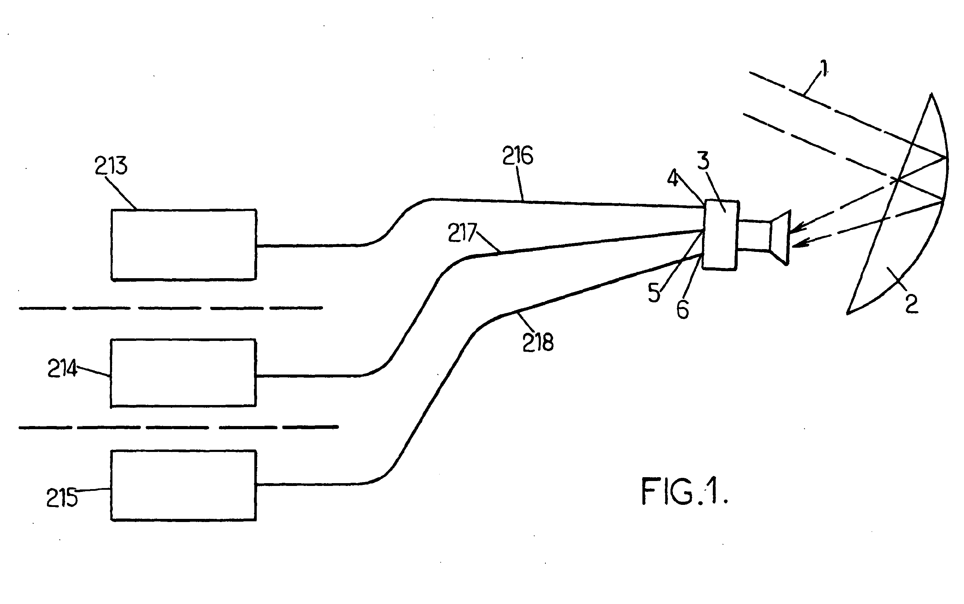

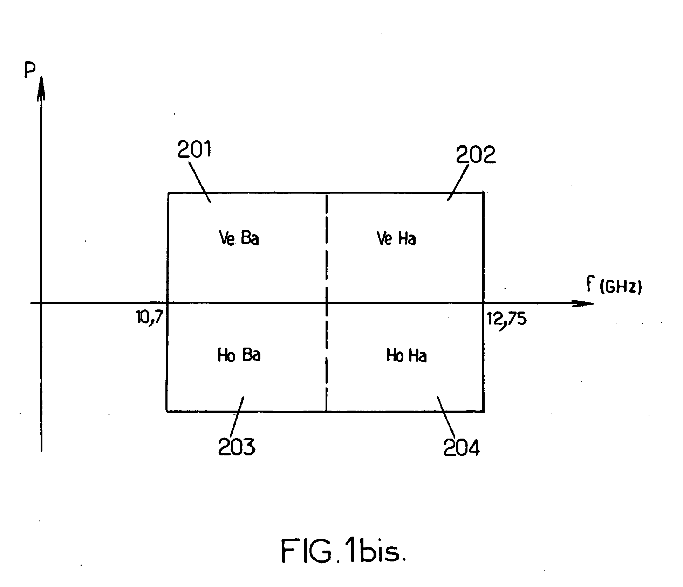

La figure 1 illustre la configuration d'une installation du type précité comprenant trois unités de traitement respectivement 213, 214 et 215. Un signal satellitaire initial 1 est réfléchi et focalisé par une antenne parabolique 2 pour être redirigé vers un récepteur 3. Des ports de sortie 4, 5 et 6 du récepteur sont connectés respectivement aux unités de traitement 213, 214 et 215 via des câbles coaxiaux 216, 217 et 218. Le récepteur 3 réalise tout d'abord une sélection d'un signal parmi plusieurs signaux compris dans le signal initial, avant de réaliser un prétraitement sur chaque signal sélectionné. Les signaux prétraités sont alors commutés par une matrice de commutation pour être transmis via les câbles coaxiaux 216, 217 et 218 aux unités de traitement respectives 213, 214 et 215. Le terme « signal » fait référence à un signal RF dans la présente description.

On décrit plus en détail ci-après les principes de bases de la réception satellitaire, basée sur les fonctions d'un récepteur classique.

Une des premières fonctions du récepteur 3 est de collecter les signaux satellitaires. Un signal satellitaire est généralement diffusé selon deux polarisations croisées, les deux polarisations pouvant être linéaires, c'est-à-dire horizontale et verticale, ou encore circulaires, c'est-à-dire gauche et droite. A cet effet un récepteur classique comprend généralement deux antennes, une première pour collecter les signaux de polarisation horizontale, respectivement gauche, et une seconde antenne pour collecter les signaux de polarisation verticale, respectivement droite. Le récepteur réalise une première sélection parmi un premier signal de polarisation horizontale, respectivement gauche et un deuxième signal de polarisation verticale, respectivement droite. Ensuite, le récepteur amplifie le signal ainsi sélectionné avec le plus petit facteur de bruit possible.

Une autre fonction importante d'un tel récepteur est d'abaisser la bande de fréquence du signal sélectionné en une bande de fréquence, communément nommée bande de fréquence de transmission ou encore Bande Intermédiaire Satellite ou BIS, compatible avec le fonctionnement des unités de traitement. Typiquement, le signal satellitaire 1 est reçu par le récepteur 3 dans une bande de fréquence initiale comprise entre 10,7 GHz et 12,75 GHz. Cette bande de fréquence est trop élevée pour être transmise directement vers une unité de traitement. Elle est donc abaissée par le récepteur 3 dans la BIS compatible avec les capacités des unités de traitement. Classiquement, la BIS est comprise entre environ 950 MHz et environ 2150 MHz. La BIS peut également être comprise entre environ 950 MHz et environ 1450 MHz. Un signal satellitaire de polarisations linéaires et une BIS comprise entre 950 MHz et 2150 MHz sont pris à titre d'exemple dans la suite de la description.

La bande de fréquence initiale étant plus large que la BIS, la bande de fréquence initiale est divisée en deux parties : une bande de fréquence initiale basse et une bande de fréquence initiale haute. Ainsi, le récepteur réalise une seconde sélection parmi un signal modulé dans la bande de fréquence basse et un signal modulé dans la bande haute. A l'issue de cette seconde sélection, le récepteur sélectionne un parmi les quatre signaux issus du signal satellitaire initial. Le spectre de ces quatre signaux est représenté schématiquement à la figure 1 bis, où par convention, des spectres de polarisation verticale ou horizontale sont représentés respectivement au-dessous ou au-dessus de l'axe des fréquences. On distingue ainsi le signal de polarisation verticale modulé dans la bande de fréquence initiale basse VeBa, le signal de polarisation verticale modulé dans la bande de fréquence initiale haute VeHa, le signal de polarisation horizontale modulé dans la bande de fréquence initiale basse HoBa et le signal de polarisation horizontale modulé dans la bande de fréquence initiale haute HoHa.

Le récepteur réalise un prétraitement du signal sélectionné avant de le commuter via une matrice de commutation. Ce prétraitement consiste à mélanger la fréquence du signal sélectionné précédemment avec une fréquence de mélange prédéterminée afin d'obtenir un signal prétraité dans la BIS. La fréquence de mélange prédéterminée généralement utilisée pour traiter la bande de fréquence initiale basse est classiquement de 9,75 GHz et celle pour traiter la bande de fréquence initiale haute est classiquement de 10,6 GHz.

Le récepteur 3 fournit donc quatre signaux, respectivement issus des signaux VeBa, VeHa, HoBa et HoHa, prétraités qui sont sélectivement transposés dans la BIS. La figure 1 bis illustre les quatre signaux VeBa, VeHa, HoBa et HoHa référencés respectivement 201, 202, 203 et 204qui sont compris dans le signal initial externe satellitaire.

Les câbles coaxiaux référencés 216, 217 et 218 transportent chacun au plus un des signaux prétraités décrits ci-dessus, le même signal pouvant bien entendu être transporté sur plusieurs câbles. Au sein du récepteur, un microcontrôleur gère une matrice de commutation en fonction de commandes reçues des unités de traitement afin de transmettre un signal prétraité déterminé à au moins une unité de traitement respective. En général, une telle matrice de commutation est intégrée au récepteur. Toutefois, dans certaines installations la matrice de commutation fait partie d'un autre boîtier connecté au récepteur.

Chaque unité de traitement a la charge de traiter un ou plusieurs signaux «utiles» extraits du signal prétraité transmis par le câble coaxial la reliant au récepteur 3. Typiquement, on désigne par « signal utile » un signal correspondant à un canal satellite donné.

Dans une architecture classique d'installation de réception satellitaire, les unités de traitement sont indépendantes les unes des autres et n'échangent pas d'information entre elles.

Or le besoin apparaît que les unités de traitement d'une même installation puissent échanger des données dans la BIS. En effet, ces unités de traitement peuvent offrir différentes fonctions telles qu'une fonction d'enregistrement de données numériques de type vidéo ou film sur support de stockage de masse, une fonction de lecture de données ainsi enregistrées, une fonction leur permettant d'être connectées au réseau téléphonique, une fonction de gestion des droits de décodage...

Quand une unité de traitement souhaite utiliser une fonction offerte par une autre unité de traitement, il est possible d'installer une nouvelle liaison filaire et donc un nouveau câble coaxial. Les inconvénients majeurs de cette solution sont le coût d'installation, le coût de maintenance et les désagréments inesthétiques du câblage. Il est encore possible de transmettre un signal depuis une unité de traitement vers une autre unité de traitement par l'intermédiaire d'opérations réalisées par le microcontrôleur. En effet, le microcontrôleur peut recevoir le signal d'une unité de traitement, le stocker pour le répéter afin de le transmettre via le câble correspondant à l'unité de traitement destinatrice. Seuls des signaux de faible débit, tels que les messages d'un protocole comme le protocole connu sous la marque DiSEqC, peuvent être ainsi échangés entre les unités de traitement, généralement à la fréquence de 22 KHz. Mais le débit n'est pas assez élevé pour transmettre une quantité d'informations requise par des applications telle que la transmission de signaux audio et vidéo puisque le signal envoyé par une unité de traitement à une autre unité de traitement est tout d'abord reçu, puis décodé et enfin stocké par le micro contrôleur du récepteur avant d'être répété pour être transmis à l'autre unité de traitement. Il est encore possible d'utiliser une solution basée sur une transmission sans fil, en intégrant à chaque unité de traitement un émetteur-récepteur. Mais cette solution présente l'inconvénient du coût financier de l'équipement. Par ailleurs, l'opérateur fournissant un service par satellite souhaite limiter l'accès à ce service aux seuls abonnés à ce service ce qui nécessite des mesures particulièrement coûteuse pour éviter l'accès au service par les voisins des abonnés qui ne seraient pas eux-mêmes abonnés. Or cette assurance s'avère être très coûteuse dans le domaine de la transmission sans fil.

Il y a donc clairement un besoin pour un système peu cher et facile à mettre en oeuvre, compris dans une installation de réception satellitaire qui permettrait aux unités de traitement d'une même installation, de partager des fonctions.

La présente invention vise à proposer une solution pour satisfaire ce besoin.

Un premier aspect de l'invention propose à cet effet un procédé de distribution de signal au sein d'une installation de réception satellitaire qui comprend :
- un récepteur pour recevoir un signal satellitaire, pour sélectionner un signal externe parmi plusieurs signaux externes compris dans ledit signal satellitaire et pour pré traiter ledit signal externe sélectionné,
- une pluralité d'unités de traitement reliée chacune au récepteur via entre autre une liaison filaire associée respective et opérant en réception dans la bande de fréquence UHF appelée Bande Intermédiaire Satellite ou BIS;
- une entité de distribution de signal avec une matrice de commutation pour commuter ledit signal externe sélectionné prétraité vers au moins une desdites unités de traitement via ladite liaison filaire associée,
caractérisé en ce qu'on prévoit au moins une connexion interne à l'installation, adaptée pour la transmission d'un signal interne qui est transmis dans ladite BIS par une première unité de traitement déterminée à au moins une deuxième unité de traitement déterminée via ladite entité de distribution de signal.

Un deuxième aspect de la présente invention propose une entité de distribution pour mettre en oeuvre le procédé décrit dans le premier aspect.

Un troisième aspect de l'invention propose un système pour mettre en oeuvre le procédé décrit dans le premier aspect.

Un quatrième aspect de l'invention propose une unité de traitement destinée à être utilisée dans un système de distribution selon le troisième aspect au sein d'une installation de réception satellitaire comprenant un récepteur satellitaire et une entité de distribution de signal.

L'unité de traitement est reliée à l'entité de distribution via une liaison filaire et comprend des moyens de traitement d'un signal reçu, dans la bande de fréquence UHF appelée Bande Intermédiaire Satellite ou BIS, via la liaison filaire.

Dans un mode de réalisation de la présente invention, l'unité de traitement comprend en outre une unité de modulation de signal adaptée pour moduler un signal dans la BIS, et pour transmettre le signal ainsi modulé vers l'entité de distribution via la liaison filaire.

L'unité de traitement peut comprendre une unité de modulation de signal adaptée pour moduler un signal dans une bande de fréquence distincte de et sensiblement adjacente à la BIS et pour transmettre le signal ainsi modulé vers l'entité de distribution via la liaison filaire.

Dans un mode de réalisation de la présente invention, une unité de traitement est une set top box.

D'autres aspects, buts et avantages de l'invention apparaîtront à la lecture de la description d'un de ses modes de réalisation, donnée ci-après en référence aux dessins annexés.

L'invention sera également mieux comprise à l'aide des dessins, sur lesquels :
- la figure 1, déjà commentée ci-dessus, illustre une architecture classique d'installation de réception satellitaire de l'art antérieur ;
- la figure 1 bis illustre schématiquement le spectre des signaux issus d'un signal externe satellitaire ;
- la figure 2 illustre schématiquement les blocs fonctionnels d'une installation de réception satellitaire selon un mode de réalisation de l'invention ;
- la figure 3 est un schéma d'une partie d'une installation de réception satellitaire selon un mode de réalisation de l'invention ;
- la figure 4 est un schéma d'une partie d'une installation satellitaire selon un autre mode de réalisation de l'invention comprenant un routeur de canaux satellitaires (SCR pour « Satellite Channel Routing »);
- la figure 5 illustre une utilisation de la BIS d'un câble coaxial selon un mode de réalisation de l'invention ;
- la figure 6 est un schéma d'une partie d'une installation de réception satellitaire selon un mode de réalisation de l'invention comprenant deux routeurs de canaux satellitaires (SCR pour « Satellite Channel Routing ») ;
- la figure 7 illustre une utilisation de la BIS d'un câble coaxial selon un mode de réalisation de l'invention ;
- la figure 8 est un schéma d'une partie d'une installation de réception satellitaire selon un autre mode de réalisation de l'invention comprenant une impédance réflexive;
- la figure 9 illustre une utilisation de la BIS d'un câble coaxial selon un mode de réalisation de l'invention ;

Sur les différentes figures, les mêmes références désignent des éléments identiques ou similaires. Dans la présente description, le terme « signal externe » fait référence à un signal reçu de l'extérieur de l'installation de réception satellitaire, c'est-à-dire un signal satellitaire ou un signal issu d'un signal satellitaire, le terme « signal interne » fait référence à un signal produit et transmis à l'intérieur de l'installation de réception satellitaire et le terme de « connexion interne » fait référence à une connexion permettant de transmettre à une ou plusieurs unités de traitement un signal interne émis par une unité de traitement dans une fréquence comprise dans la BIS.

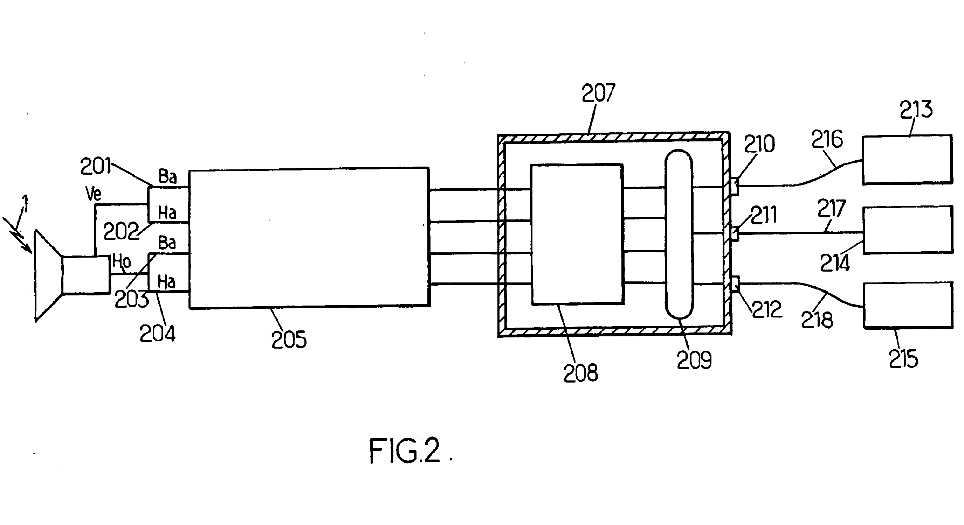

On se réfère en premier lieu à la figure 2 qui montre schématiquement les blocs fonctionnels d'une installation selon un mode de réalisation de l'invention. Un récepteur comprend un bloc fonctionnel de prétraitement 205 qui reçoit en entrée les signaux externes VeBa, Ve Ha, HoBa et HoHa référencés respectivement 201, 202, 203 et 204 issus du signal initial externe satellitaire 1. Le signal ainsi reçu est prétraité par le bloc fonctionnel de prétraitement 205 avant d'être transmis à une entité de distribution de signal 207. L'entité 207 peut être comprise dans le récepteur ou simplement lui être connectée. Elle reçoit en entrée un signal prétraité. Elle comprend une matrice de commutation 208 et des moyens de connexion 209 pour coupler des sorties de la matrice de commutation aux ports référencés 210, 211 et 212 de l'entité 207. L'entité 207 est ainsi adaptée pour pouvoir connecter directement au moins deux ports ensemble.

Sur les figures suivantes, les flèches en traits discontinus représentent la transmission d'un signal de commande émis par l'unité de traitement 213 vers l'unité de traitement 214. Les flèches en trait continu représentent la transmission d'un signal de données émis par l'unité de traitement 214.

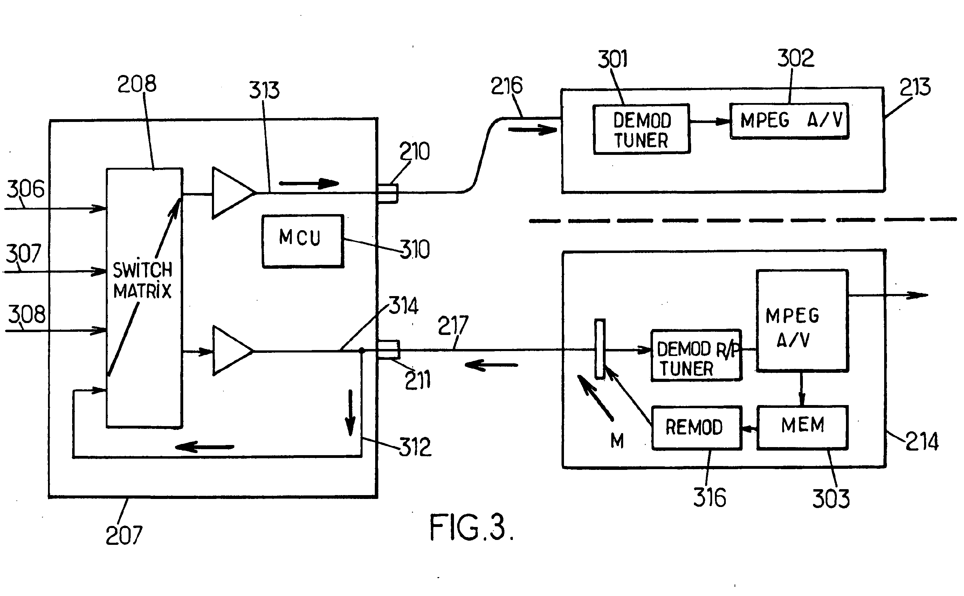

La figure 3 représente une partie d'une installation de réception satellitaire comprenant deux unités de traitement 213 et 214, selon un mode de réalisation de l'invention. Ce nombre d'unités de traitement est pris à titre d'exemple pour simplifier la description. L'invention peut bien sûr être appliquée à une installation de réception satellitaire comprenant un plus grand nombre d'unités de traitement. La figure 3 illustre une entité de distribution de signal 207 présentant deux ports 210 et 211, chacun d'entre eux étant connecté par deux câbles coaxiaux respectivement 216 et 217 aux deux unités de traitement respectivement 213 et 214. Les signaux prétraités 306, 307 et 308 sont reçus par l'entité 207. L'entité de distribution 207 présente autant de ports qu'il y a d'unités de traitement à connecter. Dans l'exemple illustré à la figure 3, l'unité de traitement 213 est un appareil qui comprend un démodulateur/tuner 301 et un décodeur de protocole MPEG 302. Ce type d'appareil ("Set-Top-Box" en anglais) précède généralement un écran de télévision. L'unité de traitement 214 est par exemple un magnétoscope numérique qui comprend classiquement un démodulateur/tuner, un décodeur de protocole MPEG et une mémoire de stockage de masse 303, telle qu'un disque dur, un CD-ROM ou un DVD-ROM. On parle de DVR (en anglais « Digital Video Recorder ») pour désigner un tel appareil. Il comprend en outre un re-modulateur portant la référence 316.

Par ailleurs, l'entité de distribution de signal 207 comprend un microcontrôleur 310, une matrice de commutation 208 dont les sorties sont référencées 313 et 314. Bien sûr, pour une telle entité comprise dans un récepteur, le microcontrôleur peut être celui du récepteur. Lorsque l'unité de traitement 214 souhaite recevoir un des signaux prétraités pour stocker les données qu'il contient, elle envoie à l'entité 207 un message de commande correspondant en utilisant par exemple le protocole DiSEqC précité. Le microcontrôleur 310 traite ce message en commandant la matrice de commutation 208 pour transmettre le signal prétraité demandé à l'unité de traitement correspondante. L'unité de traitement 214 stocke les données, qui peuvent correspondre par exemple à un film, dans la mémoire 303. Puis l'unité de traitement 214 commande l'arrêt de la réception.

Lorsque , par exemple, l'unité de traitement 213 souhaite lire le film précédemment stocké dans la mémoire 303 de l'unité de traitement 214, elle envoie à l'unité de traitement 214 un message de requête d'envoi de données correspondante via le protocole DiSEqC. Ce message de requête est transmis par le câble 216 à l'entité de distribution de signal 207. Le microcontrôleur 310 reçoit ce message de requête, le stocke et le répète sur le câble 217 pour le transmettre à l'unité de traitement 214 destinatrice du message. Il convient de noter que les signaux correspondant aux messages de protocole de commande sont généralement de fréquence de l'ordre de 22 KHz. De ce fait, l'échange de messages de commande peut être réalisé via le traitement précité du microcontrôleur. A réception du message de requête, l'entité 214 récupère les données concernées par lecture dans la mémoire 303 et les transmet dans un signal re-modulé par le re-modulateur 316 dans une fréquence comprise dans la BIS. Le signal re-modulé est transmis au port 211 de l'entité de distribution 207 via le câble 217. Dans l'entité de distribution de signal 207, une connexion bouclée en retour 312 depuis le port 211 sur une entrée de la matrice de commutation 208 permet au signal re-modulé d'être transmis en entrée de la matrice. Ainsi il peut être commuté vers la sortie 313 de la matrice pour être transmis à l'unité de traitement 213 via le câble coaxial 216. Le port 211 de l'entité de distribution de signal 207 relié à l'entité de traitement 214 est dit «port évolué ». Un tel port évolué permet une transmission de signal externe reçu du satellite comme tous les autres ports et également une transmission de signal interne de fréquence comprise dans la BIS par l'unité de traitement connectée au port évolué vers une ou plusieurs autres unités de traitement. Un port évolué devient de ce fait un port d'entrée/sortie. Une telle connexion permet la transmission d'un signal de fréquence comprise dans la BIS et porteur d'un débit élevé équivalent ou supérieur au débit permettant la transmission de données vidéo par exemple.

Dans le mode de réalisation de l'invention décrit ci-dessus, pendant que des données de la mémoire 303 de l'unité 214 sont transmises en interne, une partie de la BIS des deux câbles coaxiaux est utilisée. Or, la transmission de signal satellitaire prétraité sur un câble coaxial occupe classiquement toute la BIS. De ce fait, ni l'unité de traitement 214 ni l'unité de traitement 213 ne peuvent recevoir un signal satellitaire de l'extérieur pendant que l'unité 214 « lit » la mémoire, c'est-à-dire dans l'exemple de la figure 3, pendant la lecture du film.

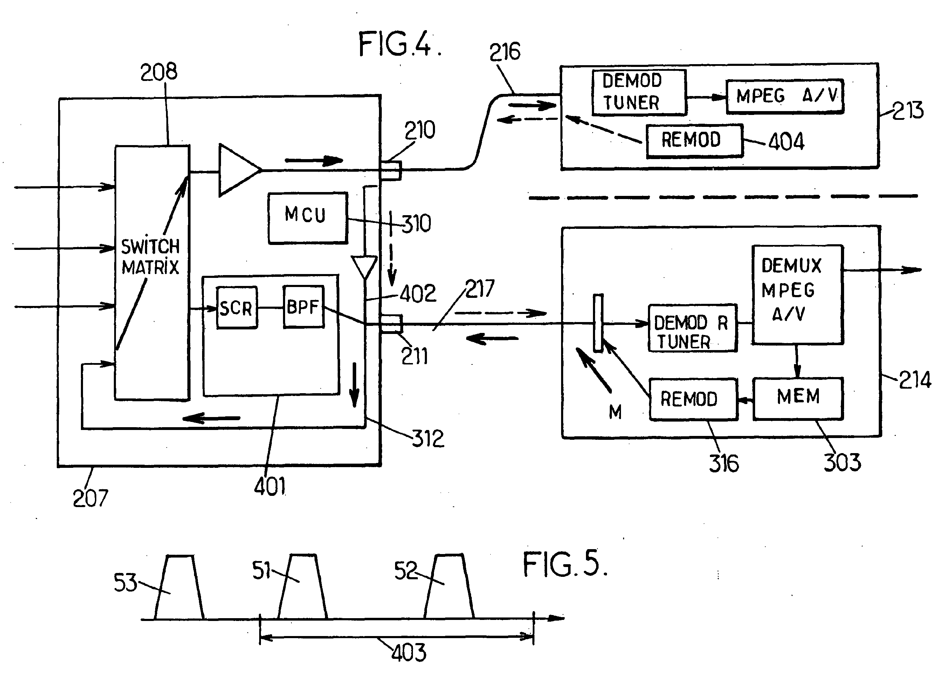

Dans un mode de réalisation préféré de l'invention illustré par le schéma de la figure 4, l'entité de distribution de signal 207 et plus précisément le port évolué de cette entité comprend des moyens pour transmettre un signal externe satellitaire prétraité dans une partie seulement de la BIS. La BIS est par conséquent séparée en une première sous bande de fréquence et une deuxième sous bande de fréquence. La première sous bande de fréquence est utilisée pour la réception de signal prétraité. La deuxième sous bande de fréquence peut ainsi être utilisée pour la transmission de signal interne re-modulé depuis une unité de traitement vers une autre unité de traitement. Cette fonctionnalité est décrite en détail dans la demande de brevet d'invention FR-A-2835368.

En effet, le brevet FR2835368 décrit un récepteur avantageusement pourvu d'une fonction de décalage et de filtrage qui permet d'extraire des signaux utiles de différents signaux prétraités et de les combiner afin de les transmettre simultanément via un même câble coaxial. Ainsi, un récepteur muni d'une telle fonctionnalité est capable de fournir à une unité de traitement requérant simultanément des signaux externes utiles issus de différents signaux prétraités, autrement dits issus de signaux de polarisation différentes et/ou de signaux de bande initiale de fréquence Ba ou Ha, à travers un câble coaxial unique. Cette fonctionnalité est basée sur un système comprenant un routeur de canaux satellite (en anglais « Satellite Channel Routing », ou SCR) et un filtre passe bande (BPF). Un routeur de canaux satellite comprend un mélangeur de fréquence pour décaler la bande de fréquence du signal prétraité en fonction d'une fréquence de mélange prédéterminée. Le signal, prétraité, commuté et décalé de la fréquence de mélange, passe ensuite dans le filtre passe bande propre à extraire un signal correspondant à un signal utile requis par l'unité de traitement requérante, autrement dit correspondant à un canal satellite donné.

La figure 4 représente une partie d'une installation de réception satellitaire comprenant une entité de distribution de signal selon un mode de réalisation préféré. L'entité de distribution de signal 207 comprend ici, comme cela est décrit pour le schéma de la figure 3, une connexion bouclée en retour 312 sur une entrée de la matrice 208. L'entité de distribution 207 comprend en outre sur le port évolué une fonction de décalage et filtrage 401 exécutée par un SCR et un filtre passe-bande. De ce fait, le signal satellitaire, prétraité et commuté est décalé et filtré afin d'être transmis dans la première sous bande de fréquence. Par conséquent, l'unité de traitement 213 peut commander la transmission de données à l'unité de traitement 214 simultanément, dans la deuxième sous bande de fréquence. La transmission pourrait être requise par l'unité de traitement 213 de la même manière que cela a été décrit précédemment dans la figure 3, via un traitement par le microcontrôleur. Dans un mode de réalisation de l'invention, l'unité de traitement 213 comprend un re-modulateur référencé 404. Le signal de commande est re-modulé par le re-modulateur 404 dans une bande de fréquence distincte et adjacente à la BIS avant d'être émis via le câble 216 vers l'entité 207. L'entité 207 reçoit le signal de commande sur le port 201 et transmet le signal au port 211 via une connexion référencée 402, avant la transmission sur le câble 217 vers l'unité de traitement 214. La connexion 402 comprend un coupleur directif et connecte le port référencé 210 au port référencé 211. Cette connexion permet la transmission de signal de UHF porteur de haut débit. En général les unités de traitement ont la capacité de traiter un signal compris dans -la BIS. Certaines peuvent traiter des signaux de fréquence comprise entre 900 et 950 MHz. Le signal de commande re-modulé par l'unité 213 est de préférence transmis dans une bande de fréquence adjacente à la BIS comprise entre 900 et 950 MHz. Une telle transmission de signal de commande par une telle connexion 402, permet une transmission très rapide des commandes entre unités de traitement. La transmission du signal émis par l'unité 214 vers l'unité 213 est réalisée de la même manière que cela a été décrit précédemment dans la description de la figure 3.

La figure 5 illustre l'utilisation de la BIS référencé 403 dans l'exemple de réalisation de la figure 4, lorsque l'unité de traitement 214 reçoit un signal externe 51 et transmet simultanément un signal interne 52 à l'unité de traitement 213. Le signal référencé 51 correspond au signal prétraité issus d'un signal externe satellitaire et le signal référencé 52 correspond au signal interne. Ces deux signaux occupent des sous bandes de fréquence distinctes comprises dans la BIS précédemment définie De ce fait, ils peuvent être transmis simultanément. Par ailleurs le signal de commande émis par l'unité 213 et référencé 53 est représenté à l'extérieur de la BIS mais dans une bande de fréquence adjacente de préférence comprise entre 900 et 950 MHz.

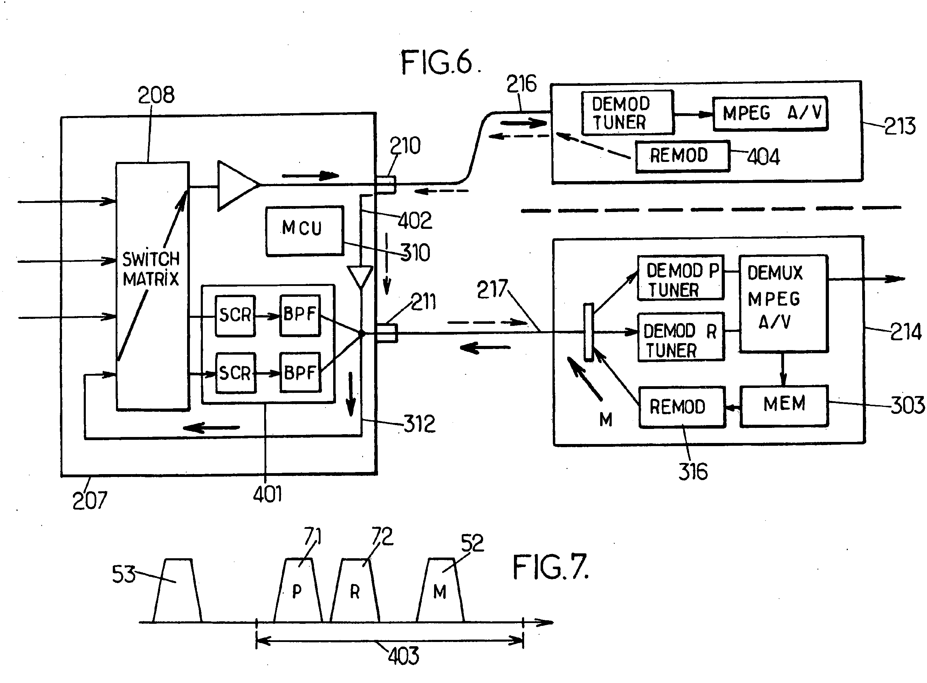

La figure 6 illustre une partie d'une installation de réception satellitaire comprenant deux unités de traitement 213 et 214, dans laquelle le port 211 de l'entité de distribution 207 permet à l'unité de traitement 214 de recevoir un signal externe, issu d'un signal satellitaire, pour une lecture immédiate (pour affichage sur un écran de télévision relié à cette unité par exemple), d'enregistrer un autre signal externe dans la mémoire, et de transmettre à l'unité de traitement 213 à une fréquence comprise dans la BIS un signal interne à partir de données récupérées dans la mémoire. Le signal lu et le signal enregistré pouvant être issus de deux signaux prétraités distincts issus d'un signal initial satellitaire. En effet, le port évolué 211 de l'entité de distribution 207 est ici corrélé à deux sorties de la matrice et donc à deux signaux prétraités qui peuvent être différents, chacun de ces deux signaux étant décalé puis filtré par la fonction de décalage et de filtrage 401 avant d'être transmis sur un seul et même câble coaxial 217.

La figure 7 illustre l'utilisation de la BIS référencée 403 du câble coaxial dans l'exemple donné ci-dessus. Le signal référencé 71 (ou P pour Play en anglais) correspond au signal externe pour une lecture immédiate, le signal référencé 72 (ou R pour Record en anglais) correspond au signal externe enregistré et le signal référencé 52 correspond au signal interne transmis par l'unité de traitement 214 à l'unité de traitement 213. Ces signaux sont répartis en fréquence à l'intérieur de la BIS précédemment définie. Les signaux 71 et 72 issus d'un signal initial externe sont transmis dans une première sous bande de fréquence et le signal interne 52 est transmis dans une deuxième sous bande de fréquence, les deux sous bandes de fréquence étant distinctes. Le signal de commande 53 est également représenté comme dans la figure 5.

Bien entendu, différents modes de réalisation de la présente invention peuvent être réalisés aisément pour une installation de réception satellitaire comprenant un plus grand nombre d'unités de traitement et avec une entité de distribution de signal présentant un nombre de ports correspondant au nombre d'unités de traitement. Par ailleurs, il convient de noter qu'une entité de distribution selon un mode de réalisation de l'invention comprenant plusieurs ports évolués est également possible. Dans un mode de réalisation préféré de l'invention, les ports d'une telle entité de distribution de signal incluent en outre une fonction de décalage et de filtrage 401.

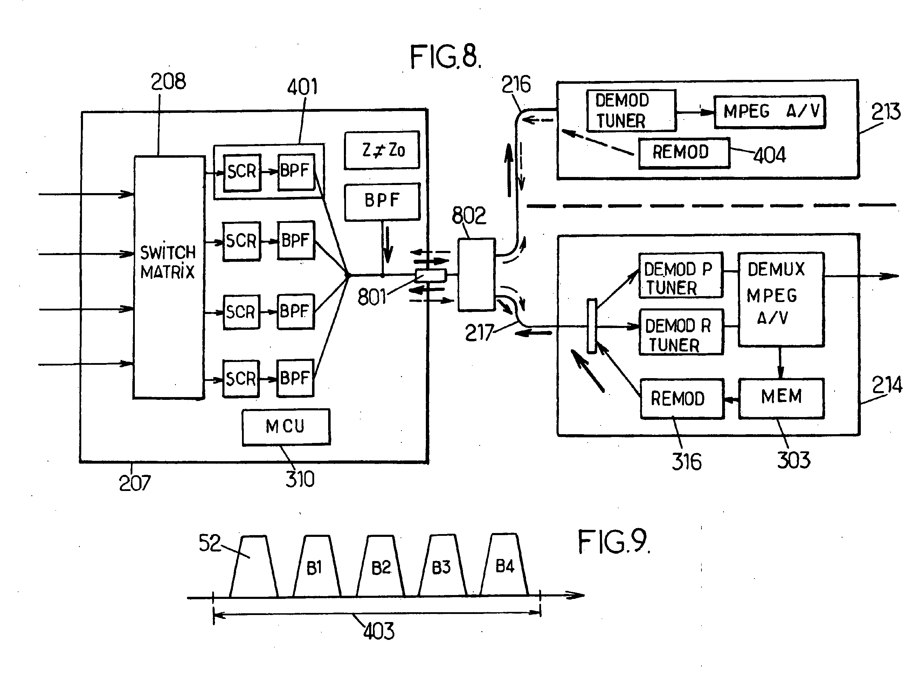

La figure 8 illustre une partie d'une installation de réception satellitaire selon un mode de réalisation de l'invention dans lequel les moyens de connexion 209 diffèrent des modes de réalisation précédemment décrits. Ici, toutes les sorties de la matrice de commutation 208 sont pourvues d'une fonction de décalage et de filtrage 401. Par conséquent, tous les signaux prétraités et commutés sont décalés et filtrés pour être transmis dans la première sous bande de fréquence. Ainsi, il est possible de coupler toutes les sorties de la matrice 208 à un seul port 801 de l'entité de distribution 207. L'unité de traitement 214, à réception d'un signal de requête de données, renvoie des données lues dans la mémoire 303 et re-module ces données sous forme d'un signal RF afin de transmettre les données via le câble coaxial 217 dans la deuxième sous bande de fréquence déterminée. L'entité de distribution de signal 207 comprend une impédance qui provoque la réflexion du signal interne ainsi reçu de l'entité de traitement 214 et re-modulé dans la deuxième sous bande de fréquence déterminée. Ainsi, le signal transmis par l'unité de traitement 214 est réfléchi par l'entité de distribution de signal 207 et par conséquent il est retransmis sur tous les câbles coaxiaux en sortie de l'entité de distribution de signal via un diviseur de puissance référencé 802. Une connexion interne est ainsi établie depuis l'unité de traitement 214 vers l'unité de traitement 213 par réflexion du signal sur un câble d'une impédance déterminée. La valeur de l'impédance est choisie pour offrir un coefficient de réflexion non nul pour la deuxième sous bande de fréquence déterminée pour la re-modulation du signal émis par l'unité 214. Le signal de commande préalablement envoyé par l'unité 213 vers l'unité 214 pourrait être transmis comme cela a été décrit dans l'exemple de la figure 3 via un traitement du microcontrôleur. Dans un mode de réalisation préféré de l'invention, la valeur de l'impédance est choisie pour offrir un coefficient de réflexion également non nul pour une troisième sous bande de fréquence déterminée comprise dans la BIS. Ainsi, le signal de commande est re-modulé par le re-modulateur 404 de l'unité 213 dans la troisième sous bande de fréquence avant d'être transmis sur le câble 216.

La figure 9 illustre l'utilisation de la BIS dans une telle installation. Les quatre signaux externes B1, B2, B3 et B4, issus d'un signal satellitaire, sont transmis dans la première sous bande de fréquence de façon simultanée avec la transmission du signal interne 52 depuis l'unité de traitement 214 vers l'unité de traitement 213. Le signal interne 52 est émis par l'unité de traitement 214 dans la seconde sous bande de fréquence. Ainsi le câble coaxial relié au port 801 peut simultanément transmettre les signaux externes B1, B2, B3, B4 et le signal interne 52.

Nombreuses sont les fonctions que peuvent partager les unités de traitement d'une même installation selon un mode de réalisation de l'invention. Dans les exemples précédemment décrits, l'unité de traitement de l'installation de réception satellitaire 214 fonctionne en outre de manière équivalente à un magnétoscope numérique. De ce fait, les données que transmet l'unité 214 à l'unité 213 sont décrites comme étant lues depuis la mémoire 303. Bien entendu, les données comprises dans le signal émis par l'unité 214 vers l'unité 213 peuvent provenir d'autres sources que la mémoire 303, comme par exemple d'un réseau externe à l'installation de réception satellitaire. En effet, l'unité 214 peut être munie d'un module de connexion à un ou plusieurs réseaux extérieurs, comme par exemple le réseau téléphonique, et de ce fait, les données comprises dans le signal interne émis par l'unité 214 vers l'unité 213 peuvent provenir du ou des réseaux extérieurs. Plus généralement, les unités d'une même installation peuvent être connectées au réseau extérieur via l'unité de traitement référencée ici 214. Une autre application intéressante d'un mode de réalisation de l'invention est de partager une fonction de gestion de droits de décodage. En effet, l'unité 214 peut comprendre une fonction adapter pour gérer et stocker les clés d'encryptage correspondantes par exemple à chaque unité de l'installation. Ainsi, dès qu'une unité de traitement est mise sous tension, elle requiert les informations relatives à ses droits de décodage auprès de l'unité 214 qui stocke ces informations.

Quelque soit le mode de réalisation de l'invention, une unité de traitement peut avantageusement comprendre des fonctions à partager et fonctionner en tant qu'unité de traitement maître alors que la ou les autres unités de traitement fonctionne en tant qu'unité de traitement esclave.

La présente invention propose avantageusement une entité de distribution de signal au sein d'une installation de réception satellitaire selon un mode de réalisation de l'invention pouvant être fabriqué très facilement et à un faible coût de production. De plus, un autre avantage de l'invention est la facilité avec laquelle il est possible d'installer une entité selon un mode de réalisation de l'invention. En effet, il convient de noter qu'une telle entité peut être intégrée au récepteur (ou LNB) et de ce fait il suffit de changer le LNB, comme cela se fait déjà lorsqu'un utilisateur souhaite par exemple ajouter des unités de traitement au sein de son installation. Une telle entité peut également être intégrée dans un boîtier connecté à un récepteur et le remplacement d'un tel boîtier est également facile à faire. Par conséquent, l'installation précédente et le câblage existant, qu'il soit de type câble coaxial ou encore d'autre types de liaison filaire, peuvent rester inchangés grâce à la mise en oeuvre de la présente invention.

Par ailleurs, étant donné que les unités de traitement opèrent dans la BIS, une installation de réception satellitaire classique comprend déjà des composants qui permettent de gérer des signaux émis dans cette bande de fréquence. De ce fait, un avantage important d'un mode de réalisation de l'invention est qu'il peut être mis en oeuvre à faibles coûts en utilisant des composants existants dans de telles installations.

## Revendications

1. Procédé de distribution de signal au sein d'une installation de réception satellitaire qui comprend :
- un récepteur (3) pour recevoir un signal satellitaire (1), pour sélectionner un signal externe parmi plusieurs signaux externes compris dans ledit signal satellitaire et pour pré traiter ledit signal externe sélectionné,
- une pluralité d'unités de traitement (213, 214, 215) reliée chacune au récepteur via entre autre une liaison filaire associée respective (216, 217, 218) et opérant en réception dans la bande de fréquence UHF appelée Bande Intermédiaire Satellite ou BIS;
- une entité de distribution de signal (207) avec une matrice de commutation (208) pour commuter ledit signal externe sélectionné prétraité vers au moins une desdites unités de traitement via ladite liaison filaire associée,
**caractérisé en ce que** le signal prétraité externe est transmis dans une première sous-bande de la BIS et
**en ce qu'**on prévoit au moins une connexion interne à l'installation, adaptée pour la transmission d'un signal interne qui est transmis dans une seconde sous-bande de ladite BIS, distincte de ladite première sous-bande de la BIS, par une première unité de traitement (214) déterminée à au moins une deuxième unité de traitement déterminée (213) via ladite entité de distribution de signal (207).

2. Procédé selon la revendication 1, **caractérisé en ce que** la BIS est comprise entre environ 950 MHz et environ 1450 MHz ou entre environ 950 MHz et environ 2150 MHz.

3. Procédé selon la revendication 1 ou 2, **caractérisé en ce que** la connexion interne est adaptée pour une transmission de données à un débit égal ou supérieur à celui requis pour la transmission d'un signal audio ou vidéo.

4. Procédé selon l'une quelconque des revendications précédentes,
**caractérisé en ce que** le signal interne est un signal contenant des données utiles de type audio et/ou vidéo et/ou des données de commande.

5. Procédé selon l'une quelconque des revendications précédentes, **caractérisé en ce qu**'on réalise au niveau de l'entité de distribution de signal (207), au moins pour la connexion interne, un décalage de fréquence et un filtrage pour transmettre une partie du signal sélectionné pré traité à la première unité de traitement (214) dans la première sous bande de fréquence de la BIS,
et en ce que l'entité de distribution de signal (207) reçoit simultanément le signal interne émis par la première unité de traitement (214) dans la seconde sous bande de fréquence de la BIS, distincte de ladite première sous bande de fréquence.

6. Procédé selon l'une quelconque des revendications précédentes, **caractérisé en ce que** l'entité de distribution de signal (207) est comprise dans le récepteur (3).

7. Procédé selon l'une quelconque des revendications précédentes, **caractérisé en ce que**, la première unité de traitement (214) comprenant une mémoire de données (303), il comprend en outre les étapes suivantes :
a) la deuxième unité de traitement (213) envoie une requête de lecture de données à la première unité de traitement (214) via un protocole de commande déterminé ;
b) la première unité de traitement (214) récupère des données dans ladite mémoire (303) et envoie à la deuxième unité de traitement (213) via la connexion interne un signal interne contenant lesdites données;
c) la deuxième unité 213 reçoit lesdites données et les traite.

8. Procédé selon l'une quelconque des revendications précédentes, **caractérisé en ce que**, la première unité de traitement (214) comprenant un module de connexion adapté pour la connexion à un réseau extérieur à l'installation, il comprend en outre les étapes suivantes :
a) la deuxième unité de traitement (213) envoie une commande de connexion audit réseau extérieur à la première unité de traitement (214) via un protocole de commande déterminé ;
b) la première unité de traitement (214) exécute ladite commande ;
c) la deuxième unité (213) échange des données avec ledit réseau via la connexion interne et la première unité de traitement (214).

9. Procédé selon l'une quelconque des revendications 1 à 8, **caractérisé en que** la connexion interne utilise une liaison (312) bouclant en retour la liaison filaire associée à la première unité de traitement sur une entrée supplémentaire de la matrice de commutation (208).

10. Procédé selon l'une quelconque des revendications 1 à 8, **caractérisé en ce que** la connexion interne utilise une réflexion résultant d'une désadaptation d'impédance au niveau de l'entité de distribution de signal (207).

11. Procédé selon l'une quelconque des revendications précédentes, **caractérisé en ce qu**'il comprend la transmission d'une commande émise par la deuxième unité de traitement vers la première unité de traitement dans une bande de fréquence Ultra Haute Fréquence adjacente à la BIS.

12. Entité de distribution de signal destinée à être utilisée dans une installation de réception satellitaire qui inclut une pluralité d'unités de traitement (213, 214, 215) opérant en réception dans la bande de fréquence UHF appelée Bande Intermédiaire Satellite ou BIS, ladite entité comprenant :
- des entrées pour recevoir des signaux externes respectifs;
- des ports (210, 211, 212) destinés à être respectivement connectés à l'une desdites unités de traitement via une liaison filaire associée respective (216, 217, 218),
- une matrice de commutation (208), et
- des moyens de connexion (209) pour coupler des sorties de ladite matrice de commutation auxdits ports,
**caractérisé en ce qu**'elle comprend en outre des moyens adaptés pour transmettre un signal externe dans une première sous-bande de la BIS et en ce que lesdits moyens de connexion (209) sont adaptés pour fournir au moins une connexion interne à l'installation, adaptée pour la transmission d'un signal interne qui est transmis dans une seconde sous-bande de ladite BIS, distincte de ladite première sous-bande de la BIS, par une première unité de traitement (214) déterminée à au moins une deuxième unité de traitement déterminée (213) via ladite entité de distribution de signal (207).

13. Entité selon la revendication 12, **caractérisée en ce que** la BIS est comprise entre environ 950 MHz et environ 1450 MHz ou entre environ 950 MHz et environ 2150 MHz

14. Entité selon la revendication 12 ou 13, **caractérisée en ce que** la connexion interne est adaptée pour une transmission de données à un débit égal ou supérieur à celui requis pour la transmission d'un signal audio ou vidéo.

15. Entité selon l'une quelconque des revendications 12 à 14, **caractérisé en ce que** le signal interne est un signal contenant des données utiles de type audio et/ou vidéo et/ou des données de contrôle

16. Entité selon l'une quelconque des revendications 12 à 15, **caractérisé en ce qu**'il comprend en outre des moyens pour transmettre depuis le récepteur (3) vers ladite première unité de traitement (214) un signal externe dans la première sous bande de fréquence de la BIS, et des moyens pour recevoir simultanément dans la seconde sous bande de fréquence un signal interne qui est émis par la première unité de traitement (214) vers au moins la deuxième unité de traitement (213) via ladite connexion interne.

17. Entité selon l'une quelconque des revendications 12 à 16, **caractérisé en ce que** les moyens de connexion (209) comprennent au moins une liaison filaire (312) bouclée en retour depuis un port déterminé de ladite entité de distribution de signal (207) sur une entrée supplémentaire de la matrice de commutation.

18. Entité selon l'une quelconque des revendications 12 à 16, **caractérisé en ce que** les moyens de connexion (209) comprennent une impédance de réflexion adaptée pour provoquer la réflexion, vers au moins la deuxième unité de traitement (213), du signal interne reçu de la première unité de traitement (214).

19. Système de distribution de signal au sein d'une installation de réception satellitaire qui comprend :
- un récepteur (3) pour recevoir un signal satellitaire (1), pour sélectionner un signal externe parmi plusieurs signaux externes compris dans ledit signal satellitaire et pour pré traiter ledit signal externe sélectionné,
- une pluralité d'unités de traitement (213, 214, 215) reliée chacune au récepteur via entre autre une liaison filaire associée respective (216, 217, 218);
**caractérisé en ce qu**'il comprend en outre une entité de distribution de signal (207) selon l'une quelconque des revendications 12 à 18.

20. Unité de traitement (213, 214) destinée à être utilisée dans un système de distribution selon la revendication 19 au sein d'une installation de réception satellitaire comprenant un récepteur (3) satellitaire et une entité de distribution de signal (207);
ladite unité de traitement étant reliée à ladite entité de distribution via une liaison filaire (217) et comprenant des moyens de traitement (301, 302) d'un signal reçu, dans la bande de fréquence UHF appelée Bande Intermédiaire Satellite ou BIS, via ladite liaison filaire.

21. Unité de traitement (214) selon la revendication 20, comprenant en outre une unité de modulation de signal (316) adaptée pour moduler un signal dans la BIS, et pour transmettre le signal ainsi modulé vers ladite entité de distribution via la liaison filaire.

22. Unité de traitement (213) selon la revendication 20 ou 21, comprenant en outre une unité de modulation de signal (404) adaptée pour moduler un signal dans une bande de fréquence distincte de et sensiblement adjacente à la BIS et pour transmettre le signal ainsi modulé vers ladite entité de distribution via la liaison filaire.

23. Set top box (213, 214) destinée à être utilisée dans un système de distribution selon la revendication 19 au sein d'une installation de réception satellitaire comprenant un récepteur (3) satellitaire et une entité de distribution de signal (207);
ladite unité de traitement étant reliée à ladite entité de distribution via une liaison filaire (217) et comprenant des moyens de traitement (301, 302) d'un signal reçu, dans la bande de fréquence UHF appelée Bande Intermédiaire Satellite ou BIS, via ladite liaison filaire.

24. Set top box (214) selon la revendication 23, comprenant en outre une unité de modulation de signal (316) adaptée pour moduler un signal dans la BIS, et pour transmettre le signal ainsi modulé vers ladite entité de distribution via la liaison filaire.

25. Set top box (213) selon la revendication 23 ou 24, comprenant en outre une unité de modulation de signal (404) adaptée pour moduler un signal dans une bande de fréquence distincte de et sensiblement adjacente à la BIS et pour transmettre le signal ainsi modulé vers ladite entité de distribution via la liaison filaire.

## Claims

1. Method of signal distribution within a satellite reception installation which comprises:
a receiver (3) for receiving a satellite signal (1) for selecting an external signal from among several external signals included in said satellite signal and for preprocessing said selected external signal,
a plurality of processing units (213, 214, 215) each linked to the receiver via notably a respective associated wire link (216, 217, 218) and operating in reception in the UHF frequency band called the Satellite Intermediate Band or SIB;
a signal distribution entity (207) with a switching matrix (208) for switching said preprocessed selected external signal to at least one of said processing units via said associated wire link,
**characterized in that** the preprocessed external signal is transmitted in a first sub-band of SIB; and
**characterized in that** there is provided at least one connection internal to the installation, adapted for the transmission of an internal signal which is transmitted in a second sub-band of SIB by a first determined processing unit (214) to at least one second determined processing unit (213) via said signal distribution entity (207).

2. Method according to Claim 1, **characterized in that** the SIB is included between around 950 MHz and around 1450 MHz or between around 950 MHz and around 2150 MHz.

3. The method according to Claim 1 or 2, **characterized in that** the internal connection is adapted for a transmission of data at a throughput equal to or greater than that required for the transmission of an audio or video signal.

4. Method according to any one of the preceding claims, **characterized in that** the internal signal is a signal containing useful data of audio and/or video type and/or control data.

5. Method according to any one of the preceding claims, **characterized in that** a frequency shift and a filtering are carried out at the level of the signal distribution entity (207), at least for the internal connection, for transmitting a part of the preprocessed selected signal to the first processing unit (214) in a first frequency sub-band of the SIB, and **in that** the signal distribution entity (207) simultaneously receives the internal signal sent by the first processing unit (214) in a second frequency sub-band of the SIB, distinct from said first frequency sub-band.

6. Method according to any one of the preceding claims, **characterized in that** the signal distribution entity (207) is included in the receiver (3).

7. Method according to any one of the preceding claims, **characterized in that**, the first processing unit (214) comprising a data memory (303), said method furthermore comprises the following steps:
a) the second procession unit (213) sends a data read request to the first processing unit (214) via a determined control protocol;
b) the first processing unit (214) recovers data in said memory (303) and sends an internal signal containing said data to second processing unit (213) via the Internal connection;
c) the second unit 213 receives said data and processes them.

8. Method according to any one of the preceding claims, **characterized in that**, the first processing unit (214) comprising a connection module adapted for the connection to a network exterior to the installation, it furthermore comprises the following steps:
a) the second processing unit (213) sends to the first processing unit (214) a connection command to said network exterior via a determined control protocol;
b) the first processing unit (214) executes said command;
c) the second unit (213) exchanges data with said network via the internal connection and the first processing unit (214).

9. Method according to any one of Claims 1 to 8, **characterized in that** the internal connection uses a feedback link (312) looping the wire link associated with the first processing unit to an additional input of the switching matrix (208).

10. Method according to any one of Claims 1 to 8, **characterized in that** the internal connection uses a reflection resulting from an impedance mismatch at the level of the signal distribution entity (207).

11. Method according to any one of the preceding claims, **characterized in that** it comprises the transmission of a command sent by the second processing unit to the first processing unit in an Ultra High Frequency band adjacent to the SIB.

12. Signal distribution entity intended to be used in a satellite reception Installation which incorporates a plurality of processing units (213, 214, 215) operating in reception in the UHF frequency band called Satellite Intermediate Band or SIB, said entity comprising:
inputs for receiving respective external signals;
ports (210, 211, 212) intended to be connected respectively to one of said processing units via a respective associated wire link (216, 217, 218);
a switching matrix (208); and
connection means (209) for coupling outputs of said switching matrix to said ports,
**characterized in that** said connection means (209) are adapted for providing at least one connection internal to the installation, adapted for the transmission of an internal signal which is transmitted in a first sub-band of SIB by a first determined processing unit (214) to at least one second determined processing unit (213) via said signal distribution entity (207).

13. Entity according to Claim 12, **characterized in that** the SIB is included between around 950 MHz and around 1450 MHz or between around 950 MHz and around 2150 MHz.

14. Entity according to Claim 12 or 13, **characterized in that** the internal connection is adapted for a transmission of data at a throughput equal to or greater than that required for the transmission of an audio or video signal.

15. Entity according to any one of Claims 12 to 14, **characterized in that** the internal signal is a signal containing useful data of audio and/or video type and/or control data.

16. Entity according to one of Claims 12 to 15, **characterized in that** it furthermore comprises means for transmitting from the receiver (3) to said first processing unit (214) an external signal in the first frequency sub-band of the SIB, and means for simultaneously receiving in a second frequency sub-band an internal signal which is sent by the first processing unit (214) to at least the second processing unit (213) via said internal connection.

17. Entity according to any one of Claims 12 to 16, **characterized in that** the connection means (209) comprise at least one feedback wire link (312) looped from a determined port of said signal distribution entity (207) to an additional input of the switching matrix.

18. Entity according to any one of Claims 12 to 16 **characterized in that** the connection means (209) comprise a reflection impedance adapted to cause the reflection, to at least the second processing unit (213), of the internal signal received from the first processing unit (214).

19. System for signal distribution within a satellite reception installation, which comprises:
a receiver (3) for receiving a satellite signal (1), for selecting an external signal from among several external signals included In said satellite signal and for preprocessing said selected external signal,
a plurality of processing units (213, 214, 215) each linked to the receiver via notably a respective associated wire link (216, 217, 218);
**characterized in that** if furthermore comprises a signal distribution entity (207) according to any one of Claims 12 to 18.

20. Processing unit (213, 214) adapted to be used in a system for signal distribution according to claim 19 within a satellite reception installation comprising a receiver (3) for receiving satellite signal and a signal distribution entity (207); said processing unit being linked to said distribution entity via a wire link (217) and comprising means for processing (301, 302) a received signal, in the UHF frequency band called Satellite Intermediate Band or SIB, via said wire link.

21. Processing unit (214) according to Claim 20, further comprising a signal modulation unit (316) adapted for modulating a signal in the SIB, and for transmitting the signal thus modulated towards said distribution entity via the wire link.

22. Processing unit (213) according to Claim 20 or 21, further comprising a signal modulation unit (404) adapted for modulating a signal in a frequency band which is distinct from and substantially adjacent to the SIB and for transmitting the signal thus modulated towards said distribution entity via the wire link.

23. Set top box (213, 214) adapted to be used in a system for signal distribution according to claim 19 within a satellite reception installation comprising a receiver (3) for receiving satellite signal and a signal distribution entity (207); said processing unit being linked to said distribution entity via a wire link (217) and comprising means for processing (301, 302) a received signal, in the UHF frequency band called Satellite Intermediate Band or SIB, via said wire link.

24. Set top box (214) according to Claim 23, further comprising a signal modulation unit (316) adapted for modulating a signal in the SIB, and for transmitting the signal thus modulated towards said dlstribution entity via the wire link.

25. Set top box (213) according to Claim 23 or 24, further comprising a signal modulation unit (404) adapted for modulating a signal in a frequency band which is distinct from and substantially adjacent to the SIB and for transmitting the signal thus modulated towards said distribution entity via the wire link.

## Patentansprüche

1. Verfahren zur Signalverteilung in einer Satellitenempfangsanlage, die umfasst:
- einen Empfänger (3) zum Empfangen eines Satellitensignals (1), um ein externes Signal aus mehreren in dem Satellitensignal enthaltenen externen Signalen auszuwählen und um das ausgewählte externe Signal zu behandeln,
- eine Mehrzahl von Behandlungseinheiten (213, 214, 215), deren jede mit dem Empfänger unter anderem Ober eine jeweils zugeordnete Drahtverbindung (216, 217, 218) verbunden ist und bei Empfang in dem Satelliten-Zwischenband oder BIS genannten UHF-Freguenzband arbeitet;
- eine Signalverteilungseinheit (207) mit einer Schaltmatrix (208) zum Schalten des ausgewählten vorbehandelten externen Signals über die zugeordnete Drahtverbindung zu mindestens einer der Behandlungseinheiten,
**dadurch gekennzeichnet, dass** das vorbehandelte externe Signal in einem ersten Unterband des BIS übertragen wird und
dass man mindestens einen internen Anschluss in der Anlage vorsieht, der für die Übertragung eines internen Signals ausgelegt ist, das in einem zweiten Unterband des BIS, das von dem ersten Unterband des BIS verschieden ist, durch eine erste bestimmte Behandlungseinheit (214) über die Signalverteilungseinheit (207) zu mindestens einer zweiten bestimmten Behandlungseinheit (213) übertragen wird.

2. Verfahren nach Anspruch 1, **dadurch gekennzeichnet, dass** das BIS zwischen etwa 950 MHz und etwa 1450 MHz oder zwischen etwa 950 MHz und etwa 2150 MHz liegt.

3. Verfahren nach Anspruch 1 oder 2, **dadurch gekennzeichnet, dass** die interne Verbindung für eine Übertragung von Daten mit einem Durchsatz gleich oder größer als derjenige, der für die übertragung eines Audio- oder Video-Signals erforderlich ist, ausgelegt ist.

4. Verfahren nach einem der vorhergehenden Ansprüche, **dadurch gekennzeichnet, dass** das interne Signal ein Signal ist, das Nutzdaten vom Typ Audio und/oder Video und/oder Steuerdaten enthält.

5. Verfahren nach einem der vorhergehenden Ansprüche, **dadurch gekennzeichnet, dass** man auf Höhe der Signalvertellungseinheit (207) mindestens für den internen Anschluss eine Frequenzverschiebung und eine Filterung vornimmt, um einen Teil des ausgewählten vorbehandelten Signals in dem ersten Frequenzunterband des BIS zu der Behandlungseinheit (214) zu übertragen,
und dass die Signalverteilungseinheit (207) gleichzeitig das interne Signal empfängt, das von der ersten Behandlungseinheit (214) im zweiten Unterfrequenzband des BIS gesendet wird, das von dem ersten Unterfrequenzband verschieden ist.

6. Verfahren nach einem der vorhergehenden Ansprüche, **dadurch gekennzeichnet, dass** die Signalverteilungseinheit (207) im Empfänger (3) enthalten ist.

7. Verfahren nach einem der vorhergehenden Ansprüche, **dadurch gekennzeichnet, dass**, wenn die erste Behandlungseinheit (214) einen Datenspeicher (303) umfasst, es außerdem die folgenden Schritte umfasst :
a) die zweite Behandlungseinheit (213) sendet eine Anfrage zum Lesen von Daten zur ersten Behandlungseinheit: (214) über ein bestimmtes Steuerprotokoll;
b) die erste Behandlungseinheit (214) gewinnt Daten in dem Speicher (303) und sendet zur zweiten Behandlungseinheit (213) Über den internen Anschluss ein diese Daten enthaltendes internes Signal;
c) die zweite Einheit (213) empfängt dieses Daten und behandelt sie.

8. Verfahren nach einem der vorhergehenden Ansprüche, **dadurch gekennzeichnet, dass**, wenn die erste Behandlungseinheit (211) ein Anschlussmodul umfasst, das für den Anschluss an ein außerhalb der Anlage befindliches Netz ausgelegt ist, es außerdem die folgenden Schritte umfasst:
a) die zweite Behandlungseinheit. (213) sendet, zur ersten Behandlungseinheit (214) über ein bestimmtes Steuerprotokoll einen Befehl zum Anschluss an dieses äußere Netz;
b) die erste Behandlungseinheit (214) führt diesen Befehl aus;
c) die zweite Einheit (213) tauscht mit dem Netz über den internen Ansshluss und die erste Behandlungseinheit (214) Daten aus.

9. Verfahren nach einem der Ansprüche 1 bis 8, **dadurch gekennzeichnet, dass** der interne Anschluss eine Verbindung (312) verwendet, die die der ersten Behandlungseinheit zugeordnete Drahtverbindung zu einem zusätzlichen Eingang der Schaltmatrix (208) zurückschleift.

10. Verfahren nach einem der Ansprüche 1 bis 8, **dadurch gekennzeichnet, dass** der interne Anschluss eine Reflexion benutzt, die sich aus einer Impedanzfehlanpassung auf Höhe der Signalverteilungseinheit (207) ergibt.

11. Verfahren nach einem der vorhergehenden Ansprüche, **dadurch gekennzeichnet, dass** es die Übertragung eines von der zweiten Behandlungseinheit gesendeten Befehls zur ersten Behandlungseinheit in einem an das BIS angrenzenden Ultrahochfrequenz-Frequenzband umfasst.

12. Signalverteilungseinheit, die zur Verwendung in einer Satellitenempfangsanlage bestimmt ist, die eine Mehrzahl von Behandlungseinheiten (213, 214, 215) einschließt, die bei Empfang in dem Satelliten-Zwischenband oder BIS genann-Len UHF-Frequenzband arbeiten, wobei diese Einheit umfasst:
- Eingänge zum Empfang von jeweiligen externen Signalen;
- Ports (210, 211, 212), die dafür bestimmt sind, jeweils mit einer der Behandlungseinheiten über eine jeweils zugeordnete Drahtverbindung (216, 217, 218) verbunden zu werden,
- eine Schaltmatrix (208) und
- Anschlussmittel (209), um Ausgange der Schaltmatrix
mit den Ports zu koppeln,
**dadurch gekennzeichnet, dass** sie außerdem Mittel umfasst, die dafür ausgelegt sind, ein externes Signal in einem ersten Unterband des BIS zu übertragen, und dass die Anschlussmittel (209) dafür ausgelegt sind, mindestens einen internen Anschluss der Anlage zu liefern, der für die Übertragung eines internen Signals ausgelegt ist, das in einem zweiten Unterband des BIS, das von dem ersten Unterband des BIS verschieden ist, durch eine erste bestimmte Behandlungseinheit (214) über die e Signalverteilungseinhelt (207) zu mindestens einer zweiten bestimmten Behandlungseinheit. (213) übertragen wird.

13. Einheit nach Anspruch 12, **dadurch gekennzeichnet, dass** das BIS zwischen etwa 950 MHz und etwa 1450 MHz oder zwischen etwa 950 MHz und etwa 2150 MHz liegt.

14. Einheit nach Anspruch 12 oder 13, **dadurch gekennzeichnet, dass** der interne Anschluss für eine Übertragung von Daten mit einem Durchsatz gleich oder größer als derjenige, der für die Übertragung eines Audio- oder Video-Signals erforderlich ist, ausgelegt ist.

15. Einheit nach einem der Ansprüche 12 bis 14, **dadurch gekennzeichnet, dass** das interne Signal ein Signal ist, das Nutzdaten vom Typ Audio und/oder Video und/oder Steuerdaten enthält.

16. Einheit nach einem der Ansprüche 12 bis 15, **dadurch gekennzeichnet, dass** sie außerdem Mittel, um vom Empfänger (3) zur ersten Behandlungseinheit (214) ein externes Signal im ersten Unterfrequenzband des BIS zu übertragen, und Mittel umfasst, um gleichzeitig im zweiten Unterfrequenzband ein internes Signal zu empfangen, das von der ersten Behandlungseinheit (214) über den internen Anschluss zu mindestens einer zweiten Behandlungseinheit (213) gesendet wird.

17. Einheit nach einem, der Ansprüche 12 bis 16, **dadurch gekennzeichnet, dass** die Anschlussmittel (209) mindestens eine Drahtverbindung (312) umfassen, die von einem bestimmten Port der Signalverteilungseinheit (207) zu einem zusätzlichen Eingang der Schaltmatrix zurückgeschleift ist.

18. Einheit nach einem der Ansprüche 12 bis 16, **dadurch gekennzeichnet, dass** die Anschlussmittel (209) eine Reflexionsimpedanz umfassen, die dafür ausgelegt ist, die Reflexion des von der ersten Behandlungseinheit (214) empfangenen internen Signals mindestens zu der zweiten Behandlungseinheit (213) zu bewirken.

19. System zur Signalverteilung in einer Satellitenempfangsanlage, die umfasst :
- einen Empfänger (3) zum Empfangen eines Satellitensignals (1), um ein externes Signal aus mehreren im Satellitensignal enthaltenen externen Signalen auszuwählen und um das ausgewählte externe Signal vorzubehandeln,
- eine Mehrzahl von Behandlungseinheiten (213, 214, 215), die jeweils mit dem Empfänger unter anderem über eine jeweils zugeordnete Drahtverbindung (216, 217, 218) verbunden sind;
**dadurch gekennzeichnet, dass** es außerdem eine Signalverteilungseinheit (207) nach einem der Ansprüche 12 bis 18 umfasst.

20. Behandlungseinheit (213, 214), die dazu bestimmt ist, in einem Verteilungssystem nach Anspruch 19 in einer Satellitenempfangsanlage verwendet zu werden, die einen Satellitenempfänger (3) und eine Signalverteilungseinheit (207) umfasst;
wobei die Behandlungseinheit mit der Verteilungseinheit über eine Drahtverbindung (217) verbunden ist und Mittel (301, 302) zum Behandeln eines Signals 1 umfasst, das in dem Satelliten-Zwischenband oder BIS genannten UHF-Frequenzband über die Drahtverbindung empfangen wird.

21. Behandlungseinheit (214) nach Anspruch 20, umfassend außerdem eine Signalmodulatienseinheit (316), die dafür ausgelegt ist, ein Signal im BIS zu modulieren und das auf diese Weise modulierte Signal über die Drahtverbindung zu der Verteilungseinheit zu übertragen.

22. Behandlungseinheit (213) nach Anspruch 20 oder 21, umfassend außerdem eine Signalmodulationseinheit (404), die dafür ausgelegt ist, ein Signal in einem Frequenzband zu modulieren, das von dem BIS verschieden ist und an dieses im Wesentlichen angrenzt, und das auf diese Weise modulierte Signal über die Drahtverbindung zu der Verteilungseinheit zu übertragen.

23. Set-Top-Box (213, 214), die dazu bestimmt ist, in einem Verteilungssystem nach Anspruch 19 in einer Satellitenempfangsanlage verwendet zu werden, die einen Satellitenempfänger (3) und eine Signalverteilungseinheit (207) umfasst;
wobei die Behandlungseinheit mit der Verteilungseinheit über eine Drahtverbindung (217) verbunden ist und Mittel (301, 302) zum Behandeln eines Signals umfasst, das in dem Satelliten-Zwischenband oder BIS genannten UHF-Frequenzband über die Drahtverbindung empfangen wird.

24. Set-Top-Box (214) nach Anspruch 23, umfassend außerdem eine Signalmodulationseinheit (316), die dafür ausgelegt ist, ein Signal im BIS zu modulieren und das auf diese Weise modulierte Signal über die Drahtverbindung zu der Verteilungseinheit zu übertragen.

25. Set-Top-Box (213) nach Anspruch 23 oder 24, umfassend außerdem eine Signalmoduicitionseinheit (404), die dafür ausgelegt ist, ein in Signal in einem Frequenzband zu modulieren, das von dem Bis verschieden ist und an dieses im Wesentlichen angrenzt, und das auf diese weise modulierte Signal über die Drahtverbindung zu der Verteilungseinheit zu übertragen.
